# EUROPÄISCHE PATENTANMELDUNG

(11) **EP 1 302 279 A1**
(43) Veröffentlichungstag der Anmeldung: **16.04.2003**
(21) Anmeldenummer: 02021416.9
(22) Anmeldetag: 25.09.2002
(51) Int. Cl.: B23Q 17/00

(54) **Rotierendes Maschinenelement sowie Verfahren zur Erfassung von Positionswerten von mindestens einem Funktionsträger eines solchen rotierenden Machinenelementes**

(30) Priorität: 13.10.2001 DE 10150710
(71) Anmelder: Gebr. Heller Maschinenfabrik GmbH, D-72622 Nürtingen (DE)
(72) Erfinder: Faigle, Bernd Hans, 72622 Nürtingen (DE)
(74) Vertreter: Jackisch-Kohl, Anna-Katharina

(57) **Zusammenfassung**

Zum Spannen von Werkstücken (18) sind Spannfutter (2) als rotierende Maschinenelemente vorgesehen. Mit dem Spannfutter (2) werden die Werkstücke (18) zentriert, gespannt sowie radial, axial und drehend ausgerichtet. Um die genaue Lage des Werkstückes (18) sowie die ordnungsgemäße Funktion des Spannfutters (2) zu kontrollieren, sind Positionssensoren (6) vorgesehen. Sie liegen in einer Steuer- und/oder Regelstrecke zwischen dem Funktionsträger (3 bis 5) und einer NC-Steuerung, die in Positionen zwischen Soll-Anschlag-positionen und/oder den mechanischen Endanschlagpositionen aktiv ist. Die Positions-Istwerte werden erfaßt und hieraus über die NC-Steuerung die Geschwindigkeit und die Beschleunigung der Funktionsträger (3 bis 5) ermittelt. Als rotierendes Maschinenelement können Spannfutter, Werkzeugrevolver, Werkzeugtrommeln, Planschieber, gesteuerte Bohrstangen und dergleichen verwendet werden.

## Beschreibung

Die Erfindung betrifft ein rotierendes Maschinenelement nach dem Oberbegriff des Anspruches 1 sowie ein Verfahren zur Erfassung von Positionswerten von mindestens einem Funktionsträger eines solchen rotierenden Maschinenelemente nach dem Oberbegriff des Anspruches 26.

Das Ausrichten und Spannen von Werkstücken, insbesondere von Kurbel- und Nockenwellen, wird in der Regel von hydraulisch beaufschlagten Spannfuttern als rotierendes Maschinenelement durchgeführt. Dabei kann das Werkstück zentrierend oder schwimmend vom Spannfutter aufgenommen werden. Das Spannfutter enthält abhängig von den Werkstückanforderungen in der Regel mehrere Funktionen, die beim Spannvorgang meist nur zeitlich nacheinander ausgeführt werden können. Solche Funktionen sind zum Beispiel das Zentrieren, das Spannen sowie die radiale, axiale und drehende Ausrichtung des Werkstückes. Diese Funktionen werden von den entsprechenden Funktionsträgern, wie Zentrierspitzen, Ausrichtelementen und Spannelementen, ausgeführt. Die Funktionszustände werden durch Kontrollfunktionen, wie zum Beispiel Werkstücktypenerkennung, Kontrolle, ob das Werkstück überhaupt vorhanden ist, und dergleichen, überwacht. Im Spannfutter treten üblicherweise beim Spannvorgang mechanische Anschlagpositionen auf, zum Beispiel beim Auftreffen der Spannbacken oder der Zentrierspitze auf das Werkstück. Diese Anschlagpositionen sind Soll-Positionen, die sich aus der Werkstückgeometrie ergeben, beispielsweise durch den Spanndurchmesser.

Weitere Anschlagpositionen ergeben sich bei Erreichen des maximalen Hubs der einzelnen Spannfutterfunktionen, bedingt durch den mechanischen Spannfutteraufbau, also jeweils an der Hubendlage. Diese Anschlagpositionen bilden Endanschlagpositionen.

Zur Kontrolle der verschiedenen Anschlagpositionen wird üblicherweise die jeweilige mechanische Bewegung eines Funktionsträgers an eine oder mehrere Kontrollstangen gekoppelt, deren Positionen mit Hilfe von berührungslosen Näherungsschaltern in Verbindung mit Einstellnocken kontrolliert werden. Da insbesondere beim Ausrichten und Spannen von Kurbel- und Nockenwellen eine Vielzahl dieser Spannfutterfunktionen benötigt wird, sind dementsprechend viele dieser Näherungsendschalter erforderlich. Der Einstellaufwand dieser Endschalter ist hoch, da die Schaltpositionen jeder einzelnen Anschlagposition über die Einstellnocken justiert werden müssen. Für jede Anschlagposition ist somit ein Näherungsschalter notwendig. Sie müssen mit einer relativ hohen Genauigkeit eingestellt werden. Diese hohe Einstellempfindlichkeit kann jedoch bei auftretenden Schwingungen, wie zum Beispiel bei Restunwuchten an Drehmaschinen, aufgrund von Bearbeitungsschwingungen an Fräsmaschinen oder aufgrund von unvermeidlichen Rundlaufabweichungen der Einstellnocken, zu Fehlmeldungen führen.

Ein weiteres Problem tritt auf, wenn sich die zu kontrollierenden Anschlagpositionen aufgrund zum Beispiel nicht konstanter Werkstückabmessungen oder durch einen anderen Werkstücktyp ändern. Dann müssen die Schaltpositionen manuell korrigiert bzw. angepaßt werden, was zu kostenintensiven Maschinenstillständen, Instandhaltungen, Instandsetzungen und Justierarbeiten führt.

Ein weiterer Nachteil der üblicherweise eingesetzten Kontrolleinrichtung eines Spannfutters besteht darin, daß ein sicherer Funktionsablauf in der Regel seriell und folglich taktzeitintensiv abläuft. So wird erst nach Überprüfen des Erreichens der Soll-Position einer Funktion die nächste Funktion eingeleitet. Mit dieser Vorgehensweise wird vermieden, daß beispielsweise während einer ungewollt verzögerten Ausrichtbewegung bereits die Spannung des Werkstückes einsetzt. Die mechanische Position einer Spannfutterfunktion ist der Steuerung darüber hinaus nur in den Positionen bekannt, wo sich auch die Näherungsendschalter befinden. Zwischenpositionen zwischen den einzelnen Näherungsendschaltern werden nicht erkannt.

Es sind Spannfutter bekannt (DE 200 12 080), bei denen die mechanische Position der Kolbenstange mit einem Kontrollsystem auf der Basis magnetostriktiver Sensoren erfaßt wird. Die Positionssensoren werden analog zu den Näherungsendschaltern eingesetzt, d.h. es werden die im Funktionsablauf vorgesehenen Soll-Positionen oder auch Endanschlagpositionen kontrolliert. Weitergehende Funktionen, wie zum Beispiel NC-gesteuertes Bewegen der Spannfutterfunktionen zwischen den Anschlagpositionen, Messen, Prüfen oder Verfahren zur Ermittlung von Referenzpunkten, sind nicht vorgesehen.

Es ist schließlich eine Servoeinrichtung bekannt (DE 199 54 634), welche die jeweilige Lage des Spannkolbens durch Induktion erkennbar macht. Auch dieses System wird lediglich zur Kontrolle der Sollpositionen bzw. der Endanschlagpositionen eingesetzt.

Der Erfindung liegt die Aufgabe zugrunde, das gattungsgemäße rotierende Maschinenelement und das gattungsgemäße Verfahren so auszubilden, daß in konstruktiv einfacher Weise mit hoher Genauigkeit der Funktionsträger überwacht werden kann.

Diese Aufgabe wird beim gattungsgemäßen rotierenden Maschinenelement erfindungsgemäß mit den kennzeichnenden Merkmalen des Anspruches 1 und beim gattungsgemäßen Verfahren erfindungsgemäß mit den kennzeichnenden Merkmalen des Anspruches 26 gelöst.

Das erfindungsgemäße rotierende Maschinenelement zeichnet sich dadurch aus, daß der Positionssensor in einer Steuer- und/oder Regelstrecke zwischen dem Funktionsträger und der NC-Steuerung liegt. Die Steuer- bzw. Regelstrecke ist in Positionen zwischen den Soll-Anschlagpositionen und/oder den mechanischen Endanschlagpositionen aktiv. Der Positionssensor ermöglicht insbesondere in der Soll-Position oder in der mechanischen Endanschlagposition leistungsfähige Diagnoseverfahren. Prozeduren zur einfachen Ermittlung oder Festlegung der Soll-Position, auch Referenzpunktverfahren genannt, wird durch den Positionssensor möglich. Ermöglicht wird die Steuer- und Regelfunktion durch eine kontinuierliche und hochpräzise Messung der Ist-Position des Funktionsträgers.

Die Erfassung des Positions-Istwertes des Funktionsträgers ermöglicht mit hoher Genauigkeit die Ermittlung von Geschwindigkeit und Beschleunigung. Ebenso können Verfahrwege, Geschwindigkeiten und Beschleunigungen für den Funktionsträger definiert werden. Hat das rotierende Maschinenelement mehrere Funktionsträger, dann können für jeden Funktionsträger individuell diese Verfahrwege, Geschwindigkeiten und Beschleunigungen definiert werden.

Die in funktionalem Zusammenhang stehenden Bewegungen der einzelnen Funktionsträger werden in einem exakten Verhältnis zueinander ausgeführt.

Die Verfahrwege, Geschwindigkeiten und Beschleunigungen für jeden Funktionsträger werden vorteilhaft in Datenverarbeitungsanlagen oder in numerischen Steuerungen programmiert, verarbeitet und gespeichert.

Unter Verwendung des Positionssensors und durch Einsatz entsprechender Softwareprogramme und Datenverarbeitungsanlagen können diese Funktionen gemessen, geprüft, überwacht und kontrolliert sowie auch Kombinationen dieser Funktionen durchgeführt werden. Die Verarbeitung der Daten und die Übermittlung erforderlicher Informationen an periphere Einrichtungen erfolgt vorteilhaft softwaremäßig.

Die Messung der Positions-Istwerte mit dem Positionssensor ist vorteilhaft eine Längenmessung. In diesem Falle führt der jeweilige Funktionsträger des erfindungsgemäßen Maschinenelementes eine Axialbewegung aus, die vom Positionssensor erfaßt wird.

Ebenso ist es möglich, daß die Messung der Positions-Istwerte mit dem Positionssensor eine Winkelpositionsmessung ist. In diesem Falle wird die Winkellage des jeweiligen Funktionsträgers durch den Positionssensor erfaßt.

Vorteilhaft basiert der Positionssensor auf dem Meßprinzip der Magnetostriktion. Hierbei messen ein oder mehrere Positionssensoren sowie ein oder mehrere Positionsgeber die Positions-lstwerte von ein oder mehreren Funktionsträgern. Die Messung der Winkelposition kann bei diesem Meßprinzip durch ein auf der Drehachse liegendes genutetes Bauteil realisiert werden, das bei Verdrehung das Magnetfeld beeinflußt und so eine eindeutige Zuordnung der Winkelposition zum Positionssensor ermöglicht.

Ist das rotierende Maschinenelement ein Spannfutter, dann können mit ihm ein oder mehrere Werkstücktypen mit jeweils unterschiedlichen Geometrien einfach und zuverlässig gespannt werden. Die jeweiligen Bewegungsabläufe der Funktionsträger des Spannfutters, wie eine Zentrierspitze, Ausrichtelement und Spannelemente, werden von NC-Programmen verarbeitet und gespeichert.

Die Meß- und Prüffunktionen können sich hierbei auf Spanndurchmesser und Werkstücklänge, gegebenenfalls auch auf weitere Werkstückmerkmale, beziehen.

Ist das rotierende Maschinenelement ein Werkstückträger zur Aufnahme eines Werkstückes, dann kann vorteilhaft die Meßfunktion des Werkstückträgers zur automatischen Werkstücktypenerkennung eingesetzt werden. Diese Werkstücktypenerkennung wird vorteilhaft zur automatischen Erkennung unterschiedlicher Werkstücktypen eingesetzt, die in willkürlicher Reihenfolge zur Fertigung gelangen.

Die Meß-, Prüf-, Überwachungs- und Kontrollfunktionen werden vorteilhaft zur automatischen Erkennung von Abweichungen vom vorgegebenen Bewegungsablauf des Spannvorganges vorgenommen, wie zum Beispiel dem Fehlen eines Werkstückes, oder ähnlichen Ereignissen.

Ebenso kann die Meß-, Prüf-, Überwachungs- und Kontrollfunktion zur automatischen Erkennung von unzulässigen Werkstückbewegungen während des Bearbeitungsprozesses eingesetzt werden, zum Beispiel das Verschieben des Werkstückes im Spannfutter aufgrund hoher Bearbeitungskräfte. Auch in diesem Fall erfaßt der Positionssensor eine entsprechende Verschiebebewegung des Funktionsträgers.

Tritt eine solche unzulässige Werkstückbewegung auf, dann wird vorteilhaft eine adaptive Regelung der Spannfutterfunktionen, Bearbeitungsfunktionen oder ähnlichem vorgenommen, zum Beispiel eine Erhöhung der Spannkraft oder eine Verringerung der Vorschubgeschwindigkeiten. Dadurch kann sofort auf solche unzulässigen Werkstückbewegungen während des Bearbeitungsprozesses reagiert werden, so daß eine Beschädigung des Werkstückes und/oder des Werkzeuges zuverlässig vermieden wird.

Die Meßfunktion eines Spannfutters kann vorteilhaft für eine Korrekturfunktion von Parametern in NC-Programmen eingesetzt werden. Eine solche Korrekturfunktion kann zum Beispiel zur automatischen Erkennung der axialen oder radialen Lage des Werkstückes im Spannfutter oder dergleichen eingesetzt werden.

Besonders vorteilhaft ist es, wenn den Positions-Sollwerten Toleranzen zugeordnet werden, bei deren Über- bzw. Unterschreiten die Überwachungs- und Kontrollfunktion aktiviert wird.

Die für das jeweilige Werkzeug oder Werkstück notwendigen Positions-Sollwerte der Funktionsträger werden mittels eines Referenzbewegungsablaufes unter Verwendung eines Referenzwerkstückes ermittelt.

Es ist auch möglich, die Positions-Sollwerte der Funktionsträger durch Programmierung festzulegen.

Werden einer oder mehrere Sensoren ausgetauscht, dann wird das rotierende Maschinenelement durch einen Referenzbewegungsablauf kalibriert.

In gleicher Weise wird das rotierende Maschinenelement durch einen Referenzbewegungsablauf kalibriert, wenn ein oder mehrere Positionsgeber ausgetauscht werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: ein rotierendes Maschinenelement nach dem Stand der Technik im Axialschnitt,
- Fig. 2: einen Axialschnitt durch eine erste Ausführungsform eines erfindungsgemäßen rotierenden Maschinenelementes, das durch ein Spannfutter gebildet ist,
- Fig. 3: im Axialschnitt eine zweite Ausführungsform eines erfindungsgemäßen rotierenden Maschinenelementes,
- Fig. 4: im Axialschnitt ein Planschieberwerkzeug,
- Fig. 5: im Axialschnitt eine Hauptspindel mit eingespanntem Werkzeug.

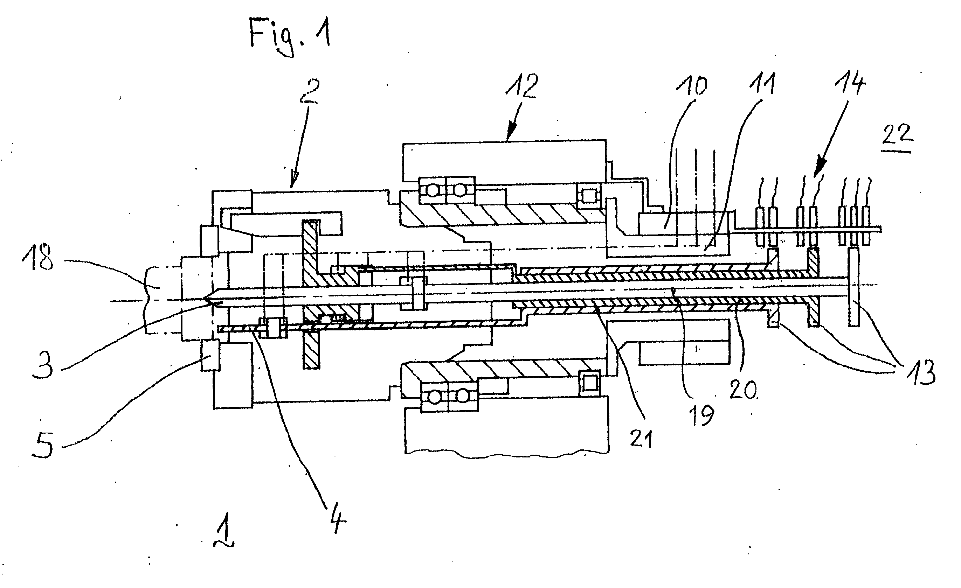

Fig. 1 zeigt als rotierendes Maschinenelement 1 ein Spannfutter 2. Es hat Spannelemente 5, Ausrichtelemente 4 sowie eine Zentrierspitze 3. Da ein solches Spannfutter 2 allgemein bekannt ist, wird es nicht näher erläutert. Mit den Spannelementen 5 wird im Spannfutter 2 ein Werkstück 18 eingespannt und mit der Zentrierspitze 3 zentriert. Das Werkstück kann beispielsweise eine Kurbelwelle oder eine Nockenwelle sein. Die Spannelemente 5 sind radial bewegbar. Die Zentrierspitze 3 wird mit einer Achse 19 in Axialrichtung verschoben. Sie wird in einer Spannhülse 20 geführt, mit der in bekannter Weise die Spannbacken 5 radial bewegt werden, um das Werkstück 18 einzuspannen bzw. freizugeben. Auf der Spannhülse 20 ist eine Betätigungshülse 21 verschiebbar gelagert, mit der das Werkstück 18 durch die Ausrichtelemente 4 in die erforderliche Winkelposition im Spannfutter 2 in bekannter Weise verschoben werden kann. Die Zentrierspitze 3, die Ausrichtelemente 4 und die Spannelemente 5 werden in bekannter Weise unabhängig voneinander bewegt.

Damit das Werkstück 18 zuverlässig eingespannt wird, sind die Achse 19, die Spannhülse 20 und die Betätigungshülse 21 am freien Ende jeweils mit einem Einstellnocken versehen. Sie sind Teil eines Längenmeßsystems 22, mit dem die axialen Bewegungswege der Achse 19, der Spannhülse 20 und der Betätigungshülse 21 erfaßt werden.

Das Spannfutter 2 wird hydraulisch betätigt. Das Hydraulikmedium wird über einen Verteiler 10 und eine Drehdurchführung 11 in bekannter Weise zugeführt.

Beim Spannvorgang wird das zu spannende Werkstück 18 zunächst mit der Zentrierspitze 3 zentriert, wozu die Achse 19 entsprechend verschoben wird. Anschließend wird das Werkstück 18 im Spannfutter 2 in die erforderliche Winkelposition ausgerichtet. Hierfür sind die Ausrichtelemente 4 vorgesehen, die mit der Betätigungshülse 21 im erforderlichen Maße axial verschoben werden und über einen (nicht dargestellten) Mechanismus in bekannter Weise eine radiale Bewegung ermöglichen. Schließlich wird das Werkstück 18 über die Spannelemente 5 in bekannter Weise gespannt. Hierbei wird die Spannhülse 20 in Achsrichtung des Spannfutters 2 verschoben.

Den Einstellnocken 13 sind ein oder mehrere Positionsschalter 14 zugeordnet, wobei für jede Sollposition der Achse 19 bzw. der Spannhülse 20 bzw. der Betätigungshülse 21 ein gesonderter Positionsschalter 14 vorgesehen ist. Die Positionsschalter 14 sind berührungslose Näherungsschalter, die mit den Einstellnocken 13 in bekannter Weise zusammenwirken. Da insbesondere beim Ausrichten und Spannen von Kurbelwellen und Nockenwellen eine Vielzahl der Spannfutterfunktionen benötigt wird, sind dementsprechend viele Positionsschalter 14 erforderlich. Da die Schaltpositionen jeder einzelnen Anschlagposition über die Einstellnocken 13 justiert werden müssen, ist ein hoher Einstellaufwand notwendig. Für jede einzelne Anschlagposition wird ein Näherungsschalter 14 benötigt. Die Positionsschalter 14 müssen mit einer hohen Genauigkeit eingestellt werden. Beim Arbeiten an der Maschine treten jedoch Schwingungen auf, wie zum Beispiel bei Restunwuchten an Drehmaschinen oder aufgrund von Bearbeitungsschwingungen an Fräsmaschinen oder aufgrund von unvermeidlichen Rundlaufabweichungen. Bei der hohen Einstellempfindlichkeit der Positionsschalter 14 führen diese Störungen zu Fehlmeldungen. Ändern sich die zu kontrollierenden Anschlagpositionen zum Beispiel wegen nicht konstanter Werkstückabmessungen oder durch einen anderen Werkstücktyp, der in das Spannfutter 2 eingespannt werden soll, müssen die Schaltpositionen manuell korrigiert bzw. angepaßt werden. Dies führt zu kostenintensiven Maschinenstillständen, Instandhaltungen, Instandsetzungen und Justierarbeiten.

Der sichere Funktionsablauf beim Spannvorgang erfolgt in der Regel seriell und folglich taktzeitintensiv. So wird erst nach Überprüfen des Erreichens der Sollposition der einen Funktion die nächste Funktion eingeleitet. Dadurch wird vermieden, daß beispielsweise während einer ungewollt verzögerten Ausrichtbewegung bereits die Werkstückspannung einsetzt. Die mechanische Position der Spannfutterfunktion ist der Steuerung jedoch nur in den Positionen bekannt, in denen sich auch die Positionsschalter 14 befinden. Zwischenpositionen werden damit nicht erkannt.

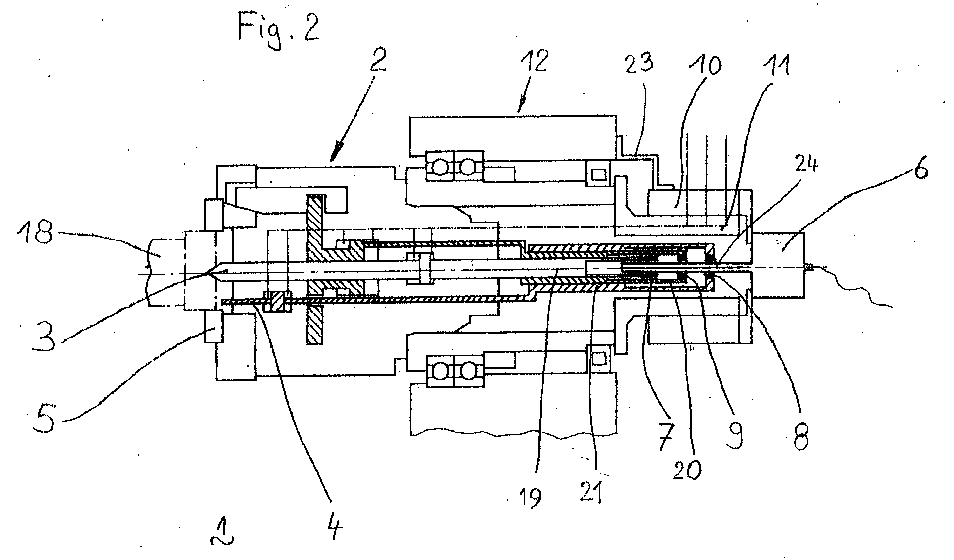

Um diese Nachteile zu vermeiden, ist das rotierende Maschinenelement 1 in einer ersten Ausführungsform entsprechend Fig. 2 ausgebildet. Das Maschinenelement wird wiederum durch ein Spannfutter 2 gebildet, dessen Bewegungen mit einem linearen, absoluten Längenmeßsystem erfaßt werden, das mit dem Magnetostriktionseffekt arbeitet. Dieses Längenmeßsystem hat einen magnetostriktiven Positionssensor 6 und Positionsgeber 7 bis 9. Der magnetostriktive Positionssensor 6 ist mit dem radial feststehenden Ölverteiler fest verbunden, der das Spannfutter 2 mit hydraulischer Energie zur Betätigung der verschiedenen Bewegungen des Spannfutters 2 versorgt. Der Ölverteiler 10 ist durch die Drehdurchführung 11 von der Rotationsbewegung des Spannfutters 2 abgekoppelt. Vorteilhaft ist der Ölverteiler 10 außerhalb der Spindel 12 vorgesehen, um eine einfache Zugänglichkeit im Wartungsfall zu gewährleisten. Der Ölverteiler 10 ist mit Befestigungselementen 23 an einer Stirnseite der Spindel 12 befestigt.

Der Positionssensor 6 ist koaxial zur Rotationsachse des Spannfutters 2 angeordnet. Der Positionssensor 6 hat einen in der Achse des Spannfutters 2 liegenden stangenförmigen Ansatz 24, der von den Positionsgebern 7 bis 9 umgeben ist. Sie liegen koaxial zum Spannfutter 2 und sind mechanisch fest mit den jeweiligen Bauteilen 19 bis 21 des Spannfutters 2 verbunden. Der Positionsgeber 7 bewegt sich proportional zur Bewegung der Zentrierspitze 3 und ist am freien Ende der Achse 19 der Zentrierspitze 3 vorgesehen. Der Positionsgeber 8 bewegt sich proportional zur Bewegung der Ausrichtelemente 4 und ist am freien Ende der Betätigungshülse 21 der Ausrichtelemente 4 vorgesehen. Der Positionsgeber 9 schließlich bewegt sich proportional zu den Spannelementen 5 und ist am freien Ende der Spannhülse 20 angeordnet. Die Bewegungen der einzelnen Spannfutterbauteile 3 bis 5 werden somit mechanisch direkt auf die Positionsgeber 7 bis 9 übertragen, die sich relativ zum ortsfesten Positionssensor 6 bewegen. Da die Positionsgeber 7 bis 9 direkt mechanisch mit den bewegten Elementen 19 bis 21 der Spannfutterteile 3 bis 5 verbunden sind, bilden die Positionsgeber 7 bis 9 mit sehr hoher Sicherheit den Funktionszustand der einzelnen Spannfutterfunktionen des Spannfutters 2 ab. Außerdem wird dadurch eine sehr hohe Meßgenauigkeit erreicht. Da sich die Positionsgeber 7 bis 9, die vorteilhaft als Ringe ausgebildet sind, längs des stangenförmigen Ansatzes 24 des Positionssensors 6 bewegen, wird jede Stellung der Zentrierspitze 3, der Ausrichtelemente 4 und der Spannelemente 5 erfaßt. Zudem ist eine Einstellung des Positionssensors auf den jeweiligen Einsatzfall nicht notwendig. Der Ansatz 24 des Positionssensors 6 ist so lang, daß die Positionsgeber 7 bis 9 in jeder Einstellage der Spannfutterelemente 3 bis 5 diesen Ansatz umgeben und somit entsprechende Signale erzeugen.

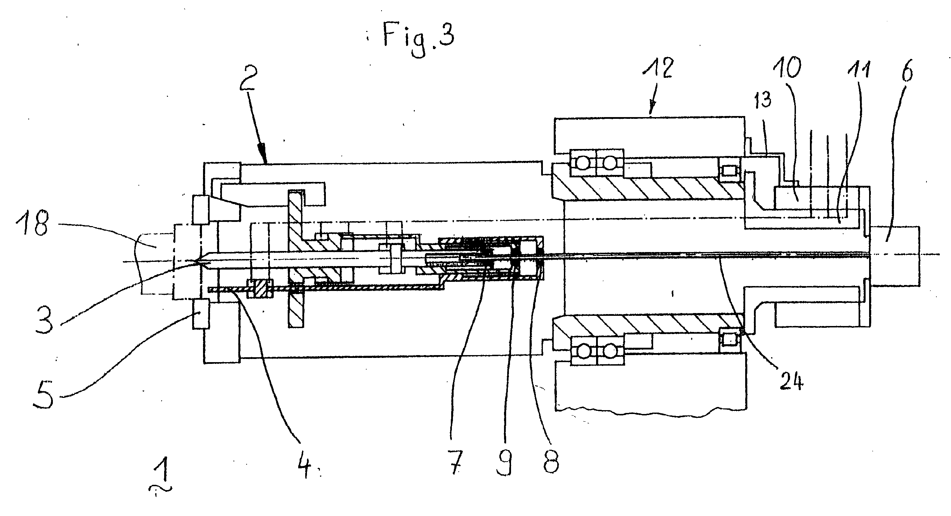

Bei der Ausführungsform gemäß Fig. 3 sind der Positionssensor 6 und die Positionsgeber 7 bis 9 unmittelbar im Spannfutter 2 untergebracht, während sie bei der vorigen Ausführungsform außerhalb des Spannfutters liegen. Der Ansatz 24 des Positionssensors 6 ist wesentlich länger als bei der vorigen Ausführungsform, da er sich durch die Spindel 12 erstrecken muß. Im übrigen ist dieses rotierende Maschinenelement 1 in Form des.Spannfutters 2 gleich ausgebildet wie bei der vorigen Ausführungsform. Der Positionssensor 6 ist am Ölverteiler 10 befestigt, der seinerseits über die Einstellelemente 13 mit der Spindel 12 verbunden ist. Da die Positionsgeber 7 bis 9 und der Positionssensor 6 im Spannfutter 2 untergebracht sind, ist dieses entsprechend länger als das Spannfutter gemäß Fig. 2. Zum Entfernen des Spannfutters 2, zum Beispiel im Reparaturfall, müssen der Positionssensor 6 und die Positionsgeber 7 bis 9 nicht demontiert werden.

Bei dem Verfahren werden insbesondere in den Positionen zwischen den Positions-Sollwerten und/oder den mechanischen Endanschlagpositionen steuer- und regelungstechnische Verfahren eingesetzt. Größen wie Verfahrweg, Bewegungsablauf, Geschwindigkeit und Beschleunigung können gezielt für jede Spannfutterfunktion individuell über ein NC-Programm definiert werden. Daraus ergibt sich gegenüber den bekannten Verfahren eine Vielzahl von Vorteilen und neuen Anwendungsmöglichkeiten.

Ein wesentlicher Vorteil ist die Reduzierung des Zeitbedarfs für den kompletten Spannvorgang. Bei den bekannten Verfahren besteht die Notwendigkeit des seriellen Ablaufs der einzelnen Spannfutterfunktionen. Beim Spannfutter gemäß den Fig. 2 und 3 können, soweit kinematisch möglich und spanntechnisch sinnvoll, verschiedene Spannfutterbewegungen parallel ausgeführt werden.

In der allgemeinen Spanntechnik ist bekannt, daß die Dynamik einer Spann- oder Ausrichtbewegung einen wesentlichen Einfluß auf die Spann- und Ausrichtqualität des Spannfutters 2 und somit auf das Bearbeitungsresultat hat. Durch die Möglichkeit der Steuerung oder Regelung beim Spannfutter gemäß den Fig. 2 und 3 kann beispielsweise die Geschwindigkeit der Zentrierspitze 3 vor Erreichen des Positions-Soilwertes reduziert und somit etwaige Verspannungen des Werkstückes vermieden werden.

In der Praxis stellt sich häufig die Aufgabe, mit dem Spannfutter 2 Werkstücktypen unterschiedlicher Geometrie zu spannen. Für jeden Werkstücktyp ist ein individueller Bewegungsablauf erforderlich. Dazu müssen bei den bekannten Verfahren bei Verwendung des Spannfutters gemäß Fig. 1 die Einstellnocken 13 der Positionsschalter 14 für jede Spannfutterfunktion in einer zeitaufwendigen, umständlichen Prozedur präzise eingestellt werden. Diese Einstellung muß auch dann vorgenommen werden, wenn ein bereits früher bearbeiteter Werkstücktyp erneut eingespannt werden muß. Bei Verwendung der Spannfutter gemäß den Fig. 2 und 3 können die für unterschiedliche Werkstücktypen erforderlichen Bewegungsabläufe des Spannfutters 2 vorteilhaft programmiert werden. Die Programme können im Datenspeicher der NC-Steuerung hinterlegt und bei Bedarf angewandt werden.

Starke maßliche Streuungen der Werkstückspanndurchmesser führen bei bekannten Verfahren zu Funktionsstörungen und machen manuelle Korrekturen an den Einstellnocken 13 der Positionsschalter 14 erforderlich. Beim Einsatz des Magnetostriktionsverfahrens gemäß den Fig. 2 und 3 können für die Positions-Sollwerte Toleranzen definiert werden, die übliche Maßstreuungen des Spanndurchmessers abdekken. Bei Über- oder Unterschreitung kann eine Fehlerdiagnosesoftware tatsächliche Funktionsstörungen erkennen, zum Beispiel ein fehlendes Werkstück 18, wodurch die Prozeßsicherheit erhöht wird.

Die Programmierung des Bewegungsablaufes der Bauteile 3 bis 5 des Spannfutters 2 kann manuell durch einmalige Erfassung und Speicherung der Positions-Sollwerte, beispielweise mittels eines Referenzbewegungsablaufs und eines Referenzwerkstückes, durchgeführt werden. Alternativ kann der Bewegungsablauf auch ohne Werkstück 18 programmiert werden, indem die entsprechenden Positions-Sollwerte im Programmablauf vorgesehen werden. Der Bewegungsbereich der Spannfutterelemente 3 bis 5 wird mit einem Referenzbewegungsablauf und ohne Werkstück ermittelt.

Ein weiterer Vorteil bei Verwendung des Magnetostriktionsverfahrens ist der einfache Austausch des Positionssensors 6 im Reparaturfall. Um das Spannfutter 2 zu kalibrieren, genügt es, einen Referenzbewegungsablauf der Spannfutterfunktionen durchzuführen. Die bei den bekannten Verfahren erforderlichen Einstellungen von Einstellnocken 13 der Positionsschalter 14 sind nicht erforderlich.

Das Längenmeßsystem eignet sich auch sehr gut, um in Kombination mit den Diagnosefunktionen Messungen der Werkstückgeometrie durchzuführen. So kann beispielsweise die Längsposition des Werkstückes 18 gemessen werden, über die Auswertung der Zentrierspitze 3 in Spannstellung erreichten Position eine entsprechende Korrektur im NC-Programm bewirken und somit bisher gegebenenfalls erforderliche externe Meßeinrichtungen ersetzen.

Ein weiterer Anwendungsfall ist die sogenannte chaotische Fertigung, bei der verschiedene Werkstücktypen in willkürlicher Reihenfolge zur Fertigung an die Maschine gebracht werden. Durch die Möglichkeit, die Einspanndurchmesser durch das Spannfutter 2 über das Längenmeßsystem 22 zu messen, kann aufgrund des Meßergebnisses eine Zuordnung zum jeweiligen Werkstücktyp erfolgen und automatisch das zugehörige NC-Programm aktiviert werden. Dieser Anwendungsfall kann entsprechend für Meßergebnisse von der Zentrierspitze 3 eingesetzt werden.

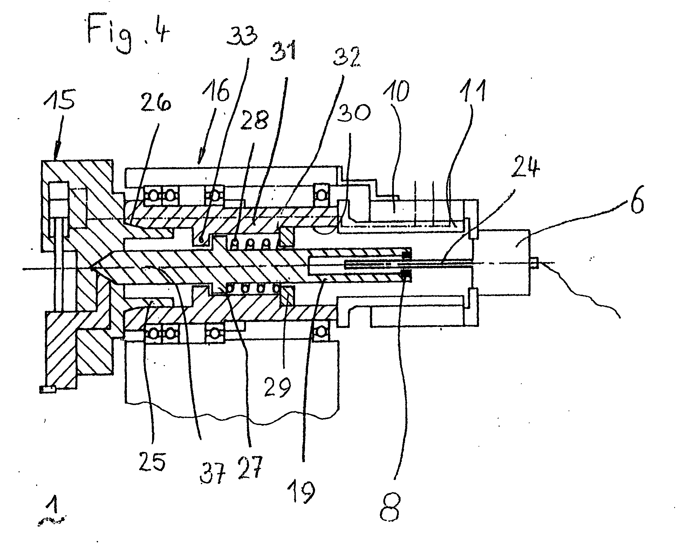

Fig. 4 zeigt einen Werkzeugträger 15, der insbesondere als Planschieberwerkzeug oder als Bohrstange ausgebildet ist. Der Werkzeugträger 15 hat einen Konus 25, mit dem er in der Spannaufnahme 26 in bekannter Weise in der Hauptspindel 16 eingespannt wird. Die Hauptspindel 16 hat einen Schieber 37, dessen verlängerte Achse 19 den ringförmigen Positionsgeber 8 aufweist, der den Ansatz 24 des Positionssensors 6 umgibt. Der Schieber 37 hat innerhalb der Hauptspindel 16 einen radialen Flansch 27, an dem sich das eine Ende einer die Achse 19 umgebenden Druckfeder 28 abstützt. Das andere Ende der Druckfeder 28 ist an einem Anschlagring 29 abgestützt, der an der Innenwand 30 einer Spindelhülse 31 am Umfang anliegt und außerdem an einer radial nach innen gerichteten Schulterfläche 32 in der Innenwand 30 der Spindelhülse 31. Auf der vom Anschlagring 29 abgewandten Seite des Flansches 27 ist die Spindelhülse 31 mit einem radial nach innen gerichteten Flansch 33 versehen, der im Bewegungsweg des Flansches 27 der Achse 19 des Schiebers 37 liegt und einen Endanschlag für den Schieber bildet. Die Funktionsweise des Werkzeugträgers 15 und der Hauptspindel 16 ist bekannt und wird darum auch nicht näher beschrieben. In Abhängigkeit vom Verschiebeweg des Schiebers 37 bewegt sich der Positionsgeber 8 relativ zum Ansatz 24 des Positionssensors 6. Damit kann die Lage des Schiebers 37 zuverlässig und mit hoher Genauigkeit erfaßt werden.

Die genannten Diagnosefunktionen, wie Messen, Prüfen, Überwachen und Kontrollieren sowie weitere Funktionen, können mit derartigen Werkzeugträgern 15 realisiert werden.

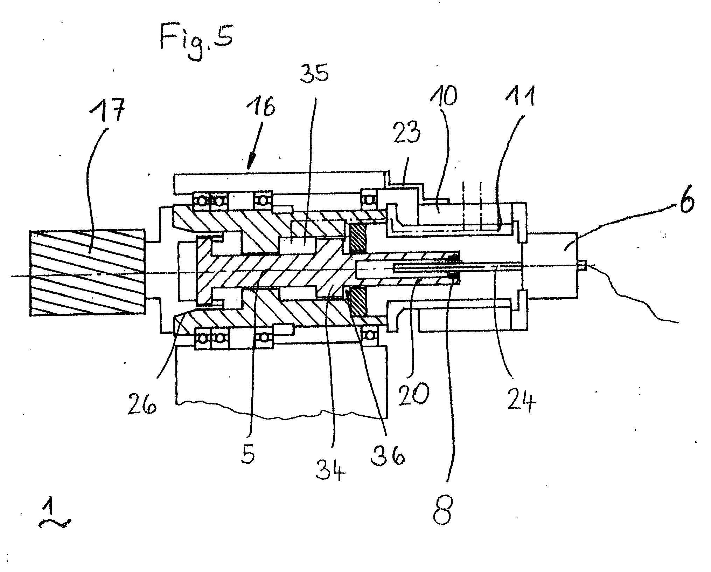

Fig. 5 zeigt als rotierendes Maschinenelement 1 eine Werkzeugmaschinenhauptspindel 16, bei der das Meßsystem zur Überwachung der korrekten Spannlage eines Werkzeuges 17 in der Spindel eingesetzt wird. Die Spindel 2 hat die Spannaufnahme 26, in der in bekannter Weise das Werkzeug 17 eingespannt wird. Der Positionssensor 6 ist entsprechend den Ausführungsformen nach den Fig. 2 bis 4 am Ölverteiler 10 befestigt, der seinerseits über die Befestigungselemente 23 an der Hauptspindel 16 befestigt ist. Der Positionssensor 6 hat den stangenförmigen Ansatz 24, der entsprechend den vorhergehenden Ausführungsformen in der Achse der Hauptspindel 16 liegt und durch den Ölverteiler 10 sowie die Drehdurchführung 11 ragt. Der Ansatz 24 wird vom Positionsgeber 8 umgeben, der mit dem Spannelement 5 mechanisch fest verbunden ist, mit dem das Werkzeug 17 in der Hauptspindel 16 in bekannter Weise verspannt wird. Das Spannelement 5 ist axial in der Hauptspindel 16 verschiebbar und hat einen Kolben 34, der zwei Druckräume 35, 36 voneinander trennt. In sie wird über den Ölverteiler 10 und die Drehdurchführung 11 das Hydraulikmedium in bekannter Weise zugeführt, um den Kolben 34 zum Spannen bzw. zum Freigeben des Werkzeuges 17 zu beaufschlagen. Da der Positionsgeber 8 direkt mechanisch mit dem Spannelement 5 verbunden ist, kann der Positionssensor 6 die Lage des Positionsgebers 8 und damit auch die Lage des Spannelementes 5 zuverlässig und mit hoher Genauigkeit erfassen. Dadurch ist gewährleistet, daß das Werkzeug 17 einwandfrei in der Hauptspindel 16 eingespannt ist.

Das beschriebene Längenmeßsystem 22 ist anhand von Spannfuttern und Werkzeugen beispielhaft beschrieben worden. Dieses Verfahren kann auch bei anderen Ausführungen angewendet werden, zum Beispiel bei Kaplanturbinen, Verseilmaschinen oder Werkzeugmaschinen. Bei Werkzeugmaschinen können insbesondere Werkstück- oder Werkzeugträger, zum Beispiel Spannfutter, Werkzeugrevolver (angetriebene Werkzeuge), Werkzeugtrommeln, Planschieber oder gesteuerte Bohrstangen, herangezogen werden.

## Patentansprüche

1. Rotierendes Maschinenelement, in dem mindestens ein Funktionsträger (3 bis 5) Bewegungen zu Soll-Anschlagpositionen oder zu mechanischen Endanschlagpositionen ausführt, die in funktionalem Zusammenhang stehen und deren einzelne Positions-istwerte voneinander unabhängig mit mindestens einem Positionssensor erfaßt werden,
**dadurch gekennzeichnet, daß** der Positionssensor (6) in einer Steuer- und/oder Regelstrecke zwischen dem Funktionsträger (3 bis 5) und einer NC-Steuerung liegt, die in Positionen zwischen den Soll-Anschlagpositionen und/oder den mechanischen Endanschlagpositionen aktiv ist.

2. Rotierendes Maschinenelement nach Anspruch 1,
**dadurch gekennzeichnet, daß** zur Betätigung des Funktionsträgers (3 bis 5) ein hydraulischer, pneumatischer, mechanischer oder elektromechanischer Antrieb vorgesehen ist.

3. Rotierendes Maschinenelement nach Anspruch 2,
**dadurch gekennzeichnet, daß** das Hydraulikmedium über einen, vorteilhaft mit einer Drehdurchführung (11) für das Hydraulikmedium verbundenen Verteiler (10) zuführbar ist.

4. Rotierendes Maschinenelement nach einem der Ansprüche 1 bis 3,
**dadurch gekennzeichnet, daß** der, vorteilhaft am Verteiler (10) befestigte Positionssensor (6) ortsfest angeordnet ist.

5. Rotierendes Maschinenelement nach einem der Ansprüche 1 bis 4,
**dadurch gekennzeichnet, daß** der Positionssensor (6) mit einem in der Achse des rotierenden Maschinenelementes (1) liegenden Ansatz (24) versehen ist.

6. Rotierendes Maschinenelement nach einem der Ansprüche 1 bis 5,
**dadurch gekennzeichnet, daß** der Positionssensor (6) auf der Basis von Lasertechnik, Optik, Ultraschall, Magnetostriktion oder anderen Meßprinzipien arbeitet.

7. Rotierendes Maschinenelement nach einem der Ansprüche 1 bis 6,
**dadurch gekennzeichnet, daß** der Positionssensor (6) koaxial zur Drehachse des rotierenden Maschinenelementes (1) liegt.

8. Rotierendes Maschinenelement nach einem der Ansprüche 1 bis 7,
**dadurch gekennzeichnet, daß** der Funktionsträger (3 bis 5) wenigstens einen, vorteilhaft ringförmig ausgebildeten und den Ansatz (24) des Positionssensors (6) umgebenden Positionsgeber (7 bis 9) aufweist, der mit dem Positionssensor (6) zusammenwirkt.

9. Rotierendes Maschinenelement nach einem der Ansprüche 1 bis 8,
**dadurch gekennzeichnet, daß** sich der Funktionsträger (3 bis 5) relativ zum Positionssensor (6) bewegt.

10. Rotierendes Maschinenelement nach einem der Ansprüche 1 bis 9,
**dadurch gekennzeichnet, daß** das rotierende Maschinenelement (1) mehrere Funktionsträger (3 bis 5) aufweist, die unabhängig voneinander bewegbar sind.

11. Rotierendes Maschinenelement nach Anspruch 10,
**dadurch gekennzeichnet, daß** jeder Funktionsträger (3 bis 5) mit einem Positionsgeber (7 bis 9) versehen ist, die vorteilhaft fest mit dem zugehörigen Funktionsträger (3 bis 5) verbunden sind.

12. Rotierendes Maschinenelement nach Anspruch 11,
**dadurch gekennzeichnet, daß** die Positionsgeber (7 bis 9) mit dem einzigen Positionssensor (6) zusammenwirken und vorteilhaft relativ zum Positionssensor (6) bewegbar sind.

13. Rotierendes Maschinenelement nach einem der Ansprüche 1 bis 12,
**dadurch gekennzeichnet, daß** mehrere Positionssensoren (6) vorgesehen sind, die vorteilhaft konzentrisch zur Achse der Positionsgeber (7 bis 9) angeordnet sind.

14. Rotierendes Maschinenelement nach einem der Ansprüche 1 bis 13,
**dadurch gekennzeichnet, daß** mehrere Positionssensoren (6) parallel zur Rotationsachse des rotierenden Maschinenelementes (1) angeordnet sind.

15. Rotierendes Maschinenelement nach einem der Ansprüche 1 bis 14,
**dadurch gekennzeichnet, daß** der Positionssensor (6) relativ zum, vorteilhaft proportional zum Funktionsträger (3 bis 5) bewegbaren Positionsgeber (7 bis 9) bewegbar ist.

16. Rotierendes Maschinenelement nach einem der Ansprüche 1 bis 15,
**dadurch gekennzeichnet, daß** das rotierende Maschinenelement (1) ein Werkstückträger (2) zur Aufnahme eines Werkstückes (18) ist.

17. Rotierendes Maschinenelement nach Anspruch 16,
**dadurch gekennzeichnet, daß** der Werkstückträger (2) ein Spannfutter ist, das vorteilhaft als Funktionsträger eine Zentrierspitze (3), Ausrichtelemente (4), Prüfelemente und Spannelemente (5) aufweist.

18. Rotierendes Maschinenelement nach einem der Ansprüche 1 bis 15,
**dadurch gekennzeichnet, daß** das rotierende Maschinenelement (1) ein Werkzeugträger (15) zur Aufnahme eines Werkzeuges (17) ist.

19. Rotierendes Maschinenelement nach Anspruch 18,
**dadurch gekennzeichnet, daß** der Werkzeugträger (15) ein Planschieberwerkzeug ist.

20. Rotierendes Maschinenelement nach Anspruch 18,
**dadurch gekennzeichnet, daß** der Werkzeugträger (15) eine Bohrstange ist, die vorteilhaft wenigstens eine, vorzugsweise mehrere radial verstellbare, jeweils eine Bohrung erzeugende Schneiden aufweist.

21. Rotierendes Maschinenelement nach einem der Ansprüche 1 bis 15,
**dadurch gekennzeichnet, daß** das rotierende Maschinenelement (1) eine Werkzeugmaschinenhauptspindel (16) zur Aufnahme eines Werkzeuges (17) ist.

22. Rotierendes Maschinenelement nach Anspruch 21,
**dadurch gekennzeichnet, daß** der Positionssensor (6) zur Überwachung der korrekten Spannlage des Werkzeuges (17) in der Hauptspindel (16) untergebracht ist.

23. Rotierendes Maschinenelement nach einem der Ansprüche 1 bis 22,
**dadurch gekennzeichnet, daß** die Soll-Positionen von der Geometrie des Werkstückes (18) abhängige mechanische Anschlagpositionen sind.

24. Rotierendes Maschinenelement nach einem der Ansprüche 1 bis 22,
**dadurch gekennzeichnet, daß** die Soll-Positionen mechanisch nicht angeschlagene Positionen sind.

25. Rotierendes Maschinenelement nach einem der Ansprüche 1 bis 24,
**dadurch gekennzeichnet, daß** der Positionssensor (6) in den Soll-Anschlagpositionen oder in den mechanischen Endanschlagpositionen Referenzpunktermittlungs- oder Diagnoseverfahren ermöglicht.

26. Verfahren zur Erfassung von Positionswerten von mindestens einem Funktionsträger eines rotierenden Maschinenelementes nach einem der Ansprüche 1 bis 25,
**dadurch gekennzeichnet, daß** die Positions-Istwerte der Funktionsträger (3 bis 5) erfaßt und hieraus über die NC-Steuerung die Geschwindigkeit und die Beschleunigung der Funktionsträger (3 bis 5) ermittelt werden.

27. Verfahren nach Anspruch 26,
**dadurch gekennzeichnet, daß** Verfahrwege, Geschwindigkeiten und Beschleunigungen für jeden Funktionsträger (3 bis 5) individuell bestimmt und in einem Regelkreis verarbeitet werden.

28. Verfahren nach Anspruch 26 oder 27,
**dadurch gekennzeichnet, daß** die in funktionalem Zusammenhang stehenden Bewegungen der einzelnen Funktionsträger (3 bis 5) in exaktem Verhältnis zueinander ausgeführt werden.

29. Verfahren nach einem der Ansprüche 26 bis 28,
**dadurch gekennzeichnet, daß** die Verfahrwege, Geschwindigkeiten und Beschleunigungen für jeden Funktionsträger (3 bis 5) in Datenverarbeitungsanlagen oder in numerischen Steuerungen programmiert, verarbeitet und gespeichert werden.

30. Verfahren nach einem der Ansprüche 26 bis 29,
**dadurch gekennzeichnet, daß** unter Verwendung des Positionssensors (6) und durch Einsatz von Softwareprogrammen und Datenverarbeitungsanlagen die Funktionen Messen, Prüfen, Überwachen, Kontrollieren sowie Kombinationen dieser Funktionen ausgeführt und vorteilhaft die vom Positionssensor (6) ermittelten Daten verarbeitet und erforderliche Informationen an periphere Einrichtungen übermittelt werden.

31. Verfahren nach einem der Ansprüche 26 bis 30,
**dadurch gekennzeichnet, daß** die Messung der Positions-lstwerte mit dem Positionssensor (6) eine Längenmessung ist.

32. Verfahren nach einem der Ansprüche 26 bis 30,
**dadurch gekennzeichnet, daß** die Messung der Positions-Istwerte mit dem Positionssensor (6) eine Winkelpositionsmessung ist.

33. Verfahren nach einem der Ansprüche 26 bis 32,
**dadurch gekennzeichnet, daß** der Positionssensor (6) auf dem Prinzip der Magnetostriktion arbeitet, wobei wenigstens ein Positionssensor (6) sowie wenigstens ein Positionsgeber (7 bis 9) die Positions-lstwerte von wenigstens einem Funktionsträger (3 bis 5) messen.

34. Verfahren nach einem der Ansprüche 26 bis 33,
**dadurch gekennzeichnet, daß** mit dem als Spannfutter ausgebildeten Werkstückträger (2) wenigstens eine Werkstücktype mit jeweils unterschiedlichen Geometrien gespannt wird, und daß vorteilhaft die Bewegungsabläufe beim Spannen des Werkstücktyps durch das NC-Programm gesteuert und von Datenverarbeitungsanlagen verarbeitet und gespeichert werden.

35. Verfahren nach einem der Ansprüche 26 bis 34,
**dadurch gekennzeichnet, daß** sich die Meß- und Prüffunktionen auf Spanndurchmesser und Werkstücklänge und gegebenenfalls weitere Werkstückmerkmale beziehen.

36. Verfahren nach einem der Ansprüche 26 bis 35,
**dadurch gekennzeichnet, daß** die Meßfunktion des Werkstückträgers (2) zur automatischen Werkstücktypenerkennung eingesetzt wird, die vorteilhaft zur automatischen Erkennung unterschiedlicher Werkstücktypen eingesetzt wird, die in willkürlicher Reihenfolge zur Fertigung gelangen.

37. Verfahren nach einem der Ansprüche 26 bis 36,
**dadurch gekennzeichnet, daß** die Meß-, Prüf-, Überwachungsund Kontrollfunktion zur automatischen Erkennung von Abweichungen vom vorgegebenen Bewegungsablauf des Spannvorganges eingesetzt wird, wie zum Beispiel dem Nichtvorhandensein eines Werkstückes (18) oder dergleichen.

38. Verfahren nach einem der Ansprüche 26 bis 37,
**dadurch gekennzeichnet, daß** die Meß-, Prüf-, Überwachungsund Kontrollfunktion zur automatischen Erkennung von unzulässigen Werkstückbewegungen während des Bearbeitungsprozesses eingesetzt wird, zum Beispiel das Verschieben des Werkstückes (18) im Spannfutter aufgrund hoher Bearbeitungskräfte.

39. Verfahren nach Anspruch 38,
**dadurch gekennzeichnet, daß** die automatische Erkennung von unzulässigen Werkstückbewegungen eine adaptive Regelung der Spannfutterfunktionen, Bearbeitungsfunktionen und dergleichen, bewirkt, zum Beispiel eine Erhöhung der Spannkraft oder eine Verringerung der Vorschubgeschwindigkeiten.

40. Verfahren nach einem der Ansprüche 26 bis 39,
**dadurch gekennzeichnet, daß** die Meßfunktion des als Spannfutter ausgebildeten Werkstückträgers (2) für eine Korrekturfunktion von Parametern im NC-Programm eingesetzt wird, die vorteilhaft zur automatischen Erkennung der axialen oder radialen Lage des Werkstückes (18) im Werkstückträger (2) oder dergleichen eingesetzt wird.

41. Verfahren nach einem der Ansprüche 26 bis 40,
**dadurch gekennzeichnet, daß** den Positions-Sollwerten Toleranzen zugeordnet werden, bei deren Über- bzw. Unterschreiten die Überwachungs- und Kontrollfunktion aktiviert wird.

42. Verfahren nach einem der Ansprüche 26 bis 41,
**dadurch gekennzeichnet, daß** die, vorteilhaft durch Programmierung festgelegten Positions-Sollwerte der Funktionsträger (3 bis 5) mittels eines Referenzbewegungsablaufes unter Verwendung eines Referenzwerkstückes ermittelt werden.

43. Verfahren nach einem der Ansprüche 26 bis 42,
**dadurch gekennzeichnet, daß** das rotierende Maschinenelement (1) nach einem Austausch wenigstens eines Positionssensors (6) durch einen Referenzbewegungsablauf kalibriert wird.

44. Verfahren nach einem der Ansprüche 26 bis 43,
**dadurch gekennzeichnet, daß** das rotierende Maschinenelement (1) nach einem Austausch mindestens eines Positionsgebers (7 bis 9) durch einen Referenzbewegungsablauf kalibriert wird.
